(19) Europäisches Patentamt / European Patent Office / Office européen des brevets

(11) **EP 3 955 528 B1**

(12) **EUROPEAN PATENT SPECIFICATION**

(45) Date of publication and mention
of the grant of the patent:
**05.06.2024   Bulletin 2024/23**

(21) Application number: **20869951.2**

(22) Date of filing: **23.09.2020**

(51) International Patent Classification (IPC):
*H04L 43/0852* (2022.01)      *H04L 43/106* (2022.01)
*H04L 43/0864* (2022.01)      *H04J 3/06* (2006.01)
*H04J 3/14* (2006.01)          *H04B 10/079* (2013.01)

(52) Cooperative Patent Classification (CPC):
**H04L 43/0864; H04B 10/0793; H04J 3/14;
H04L 43/0858; H04L 43/106;** H04J 3/065;
H04J 3/0682; H04J 2203/0057; Y02D 30/70

(86) International application number:
**PCT/CN2020/116970**

(87) International publication number:
**WO 2021/057756 (01.04.2021 Gazette 2021/13)**

(54) **DELAY MEASUREMENT METHOD, SYSTEM AND STORAGE MEDIUM**

VERZÖGERUNGSMESSVERFAHREN, SYSTEM UND SPEICHERMEDIUM

PROCÉDÉ DE MESURE DE RETARD, SYSTÈME ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **27.09.2019   CN 201910926933**

(43) Date of publication of application:
**16.02.2022   Bulletin 2022/07**

(73) Proprietor: **Sanechips Technology Co., Ltd.
Shenzhen, 518055 (CN)**

(72) Inventor: **WANG, Cheng
Shenzhen, Guangdong 518057 (CN)**

(74) Representative: **Swindell & Pearson Limited
48 Friar Gate
Derby DE1 1GY (GB)**

(56) References cited:
EP-A1- 2 472 754        EP-A1- 3 044 891
CN-A- 101 087 400       CN-A- 101 582 733
US-A1- 2012 155 497     US-A1- 2017 366 287

## Description

## TECHNICAL FIELD

This application relates to high-speed data transmission communication, more particularly, to a delay measurement method and system, and a storage medium.

## BACKGROUND

In this information era, people's demand for information is constantly increasing, and most information transmission depends on an optical transmission network. Performances of the optical transmission network affect the quality of its bearer services, and performance indexes of the optical transmission network include: delay, error code, switching time, jitter and drift, or the like. Video and voice services require higher instantaneity, and the end-to-end delay of business data of the video and voice services is the most important. Different bearer services have different requirements for transmission delay. In the design stage of the optical transmission network, before the bearer services, it is necessary to measure the transmission delay between each access station in a transmission system to determine whether the transmission delay meets the delay requirements of the bearer services. With the advent of the 5th Generation Mobile Communication Technology (5G) era, the delay requirements of transmission networks become higher and higher.

There are two delay measurement methods: in the first method, a special delay measurement instrument is used for measurement, which leads to complicated device and high cost, and measurement errors will be introduced due to external device; and in the second method, although the measurement errors introduced by the external device are reduced by means of message transmitting, a special data channel is needed to transmit and receive messages during measurement, which affects normal communication of data, and it takes time to transmit and analyze messages, which leads to measurement errors.

Patent literature (EP2472754A1) discloses a transport device and a clock and time synchronization thereof. The transport device sends data frames to a peer transport device and records the sending time of the frame header of each data frame, inserts a generated message to the data frames, and uses the sending time of the frame header of the data frame that carries the message header as a sending time stamp. The transport device receives data frames from the peer transport device and records the receiving time of the frame header of each data frame, identifies a message header in the data frames, and uses the receiving time of the frame header of a data frame carrying the message header as a receiving time stamp. The transport device performs calculations on a series of paired sending time stamps and receiving time stamps and adjusts its clock frequency and time according to the calculation results to synchronize the clock and time between transport devices.

While the above patent literature may achieve its intended purposes, there is still a need for a new and improved delay measurement method and system.

## SUMMARY

The embodiments of the present application provide a delay measurement method and system, and a storage medium, which improve the delay measurement accuracy and the data transmission efficiency.

The embodiments of the present application provide a delay measurement method applied to a master terminal according to independent claim 1 and applied to a slave terminal according to independent claim 7.

The embodiments of the present application provide a delay measurement system according to independent claim 12.

The embodiments of the present application provide a storage medium storing a computer program according to claim 13 which, when executed by a processor, cause the processor to perform the delay measurement method described in any of the above embodiments.

## BRIEF DESCRIPTION OF DRAWINGS

FIG. 1 is a flowchart of a delay measurement method provided by an embodiment of the present application;
FIG. 2 is a schematic structural diagram of an information frame provided by the embodiment of the present application;
FIG. 3 is a flowchart of another delay measurement method provided by an embodiment of the present application;
FIG. 4 is a relationship diagram between a timestamp value and an information frame provided by the embodiment of the present application;
FIG. 5 is a structural block diagram of a delay measurement system provided by an embodiment of the present application;
FIG. 6 is a structural block diagram of a delay measurement module provided by the embodiment of the present application; and
FIG. 7 is a schematic diagram of status transition between a master terminal and a slave terminal in a delay measurement process provided by the embodiment of the present application.

## DETAILED DESCRIPTION

Embodiments of the present invention are described below with reference to the accompanying drawings. In case of no conflict, the embodiments in the present application and the features in the embodiments may be arbitrarily combined with each other.

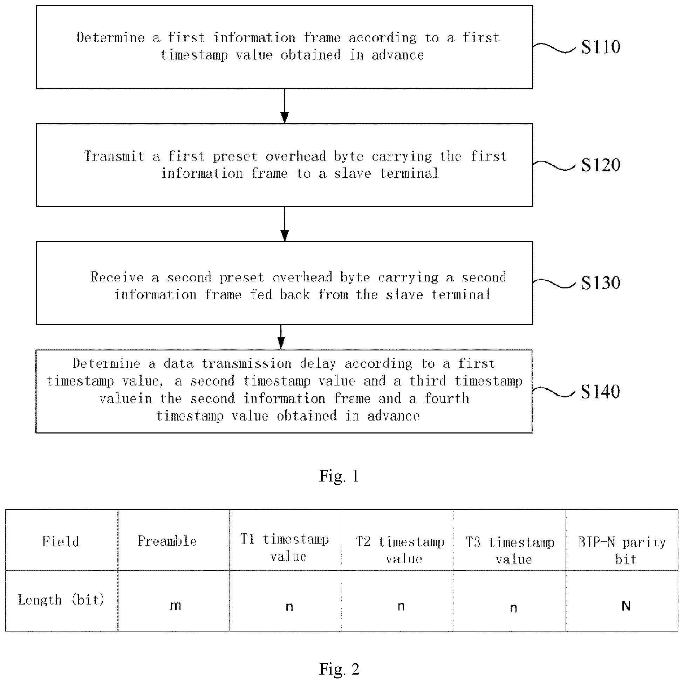

FIG. 1 is a flowchart of a delay measurement method provided by an embodiment of the present application. This embodiment is applied to long-distance optical fiber communication, and the delay between two chips is measured based on the Synchronous Digital Hierarchy (SDH) protocol. This embodiment is executed by a master terminal. The master terminal refers to a terminal initiating delay measurement. In the embodiment, the master terminal may be a device containing a delay measurement module, and in some embodiments, the device may be a chip, which is not limited.

As shown in FIG. 1, the delay measurement method in this embodiment includes steps of S 110, S120, S130 and S140.

At S 110, a first information frame is determined according to a first timestamp value obtained in advance.

In the embodiment, the count of a local clock is used as a timestamp for delay calculation. In each delay measurement process, in order to accurately calculate a data transmission delay between the master terminal and the slave terminal, it is necessary to acquire four timestamp values. The four timestamp values include the first timestamp value, wherein the first timestamp value refers to the moment when the master terminal receives a master mode start instruction and monitors the arrival of a first preset overhead byte in a data stream. After the first timestamp value is determined, the first information frame is formed by using the first timestamp value.

FIG. 2 is a schematic structural diagram of an information frame provided by the embodiment of the present application. As shown in FIG. 2, one information frame includes a preamble, a T1 timestamp value, a T2 timestamp value, a T3 timestamp value and a Bit Interleaved Parity (BIP) parity bit. The T1 timestamp value, the T2 timestamp value and the T3 timestamp value respectively refer to the first timestamp value, the second timestamp value and the third timestamp value. In the embodiment, lengths of the preamble, the T1 timestamp value, the T2 timestamp value, the T3 timestamp value and the BIP-N parity bit may sequentially be m, n, n, n and N. In some embodiments, the preamble is 2-bit data, for example, the preamble is 11; and the T1 timestamp value, the T2 timestamp value and the T3 timestamp value are all n-bit wide. A bit width value corresponding to a timestamp value is determined according to the actual demand, and the longer the delay is, the higher the precision is, and the larger the bit width corresponding to the timestamp value is. In the embodiment, the length of the BIP-N parity may be 4 bits, 8 bits or 12 bits, which is not limited. Take the BIP-N parity bit as a 4-bit code as an example, that is, the BIP-N parity bit in the information frame is a BIP4 parity bit, and a value of the BIP4 parity bit is obtained by carrying out 4-bit XOR on partial data of T1, T2 and T3 in the information frame, which is used to check the accuracy of the received data. In the embodiment, the first information frame includes the preamble, the T1 timestamp value, the T2 timestamp value, the T3 timestamp value and the BIP4 parity bit. The T2 timestamp value and the T3 timestamp value in the first information frame are both 0, and a 4-bit parity bit value, which is a value corresponding to the BIP parity bit in the first information frame, is calculated according to the T1 timestamp value, the T2 timestamp value and the T3 timestamp value, and the corresponding first information frame is formed by the T1 timestamp value, the T2 timestamp value, the T3 timestamp value and the value corresponding to the BIP parity bit in the first information frame. The method of calculating the value corresponding to the BIP4 parity bit is as follows: carrying out 4-bit XOR on partial data of the T1 timestamp value, the T2 timestamp value and the T3 timestamp value, and the BIP4 parity bit is used to check the correctness of the received data.

At S120, a first preset overhead byte carrying the first information frame is transmitted to a slave terminal.

In one embodiment, the first preset overhead byte is an overhead byte in an SDH protocol. In the embodiment, the first preset overhead byte may be a section overhead byte in the SDH protocol, and may also be a path overhead byte in the SDH protocol, which is not limited. In the case that the master terminal monitors the arrival of the first preset overhead byte, the first information frame formed is interpolated into the first preset overhead byte and transmitted to the slave terminal along with the data stream. The slave terminal refers to a terminal receiving delay measurement. In the embodiment, the slave terminal may be a device containing a delay measurement module, and in some embodiments, the device may be a chip, which is not limited. In one embodiment, the delay measurement module in the slave terminal is the same as the delay measurement module in the master terminal.

At S 130, a second preset overhead byte carrying a second information frame fed back from the slave terminal is received.

In one embodiment, the second preset overhead byte is an overhead byte in the SDH protocol. In the embodiment, the second preset overhead byte is the same as the first preset overhead byte, which may be a section overhead byte in the SDH protocol, and may also be a path overhead byte in the SDH protocol, which is not limited. In one embodiment, the second preset overhead byte and the first preset overhead byte refer to the same overhead byte, but the information frames carried in the first preset overhead byte and the second preset overhead byte are different. In other words, the first information frame and the second information frame are different. In the embodiment, the second information frame has a frame format shown in FIG. 2, but the T2 timestamp value and the T3 timestamp value in the second information frame are not 0. The T2 timestamp value in the second information frame is the moment when a header of the first information frame is monitored by the slave terminal, that is, the moment when the preamble of the first information frame is monitored. The T3 timestamp value in the second information frame is the moment when a BIP parity bit in the first information frame is correctly checked, and the second information frame is interpolated into the second preset overhead byte in the case of monitoring the arrival of the second preset overhead byte in the data stream. In the case of determining the T2 timestamp value and the T3 timestamp value in the second information frame, the value obtained by carrying out 4-bit XOR on partial data of the T1 timestamp value, the T2 timestamp value and the T3 timestamp value is taken as the value corresponding to the BIP4 parity bit in the second information frame to form the corresponding second information frame. After determining the second information frame, the second information frame is interpolated into the second preset overhead byte, and fed back to the master terminal along with the data stream.

At S 140, a data transmission delay is determined according to a first timestamp value, a second timestamp value and a third timestamp value in the second information frame and a fourth timestamp value obtained in advance.

In the embodiment, the fourth timestamp value is the moment when a header of the second information frame transmitted from the slave terminal is monitored by the master terminal, that is, the moment when a preamble of the second information frame is monitored. After receiving the preamble of the second information frame, the master terminal continues to receive other information in the second information frame, and carries out BIP4 check on the second information frame after receiving the T3 timestamp value of the second information frame, and calculates the T1 timestamp value, the T2 timestamp value and the T3 timestamp value and a locally recorded T4 timestamp value in the case that the BIP4 check result is correct, so as to obtain the corresponding data transmission delay. The data transmission delay refers to a two-way transmission delay between the master terminal and the slave terminal, which is recorded as $2t_{delay}$, that is, the data transmission delay $2t_{delay} = T2 - T1 + T4 - T3$. According to the technical scheme, the overhead bytes in the SDH protocol form a serial channel, and a specialized information frame format is used for transmitting and receiving timestamp information, so that the measurement error is reduced, and the interference to the communication of a main data stream is avoided.

In one embodiment, after the first information frame or the second information frame is determined, the first information frame or the second information frame is transmitted through a specific overhead byte of frame format data of a Synchronous Transport Module (STM), and one overhead byte, or several overhead bytes, or partial bits in one overhead byte may be selected to transmit and receive the first information frame or the second information frame.

In one embodiment, determining the corresponding first information frame according to the first timestamp value obtained in advance includes: in the case of receiving a master mode start instruction and monitoring the arrival of the first preset overhead byte in a data stream, obtaining a current timestamp value of a local clock, and taking the current timestamp value as the first timestamp value corresponding to the first information frame; determining a corresponding first bit interleaved parity BIP parity bit according to the first timestamp value, and the pre-configured second timestamp value and the pre-configured third timestamp value, wherein the second timestamp value and the third timestamp value are both a first preset value; and determining the first information frame according to the first timestamp value, the second timestamp value, the third timestamp value, the first BIP parity bit and a pre-configured preamble.

In the embodiment, in the case of receiving the master mode start instruction and monitoring the arrival of the first preset overhead byte in the data stream, the current timestamp value of the local clock is recorded and taken as the first timestamp value. The first timestamp value is filled in the position of the T1 timestamp value in the first information frame, and the first preset value is filled in the positions of the T2 timestamp value and the T3 timestamp value in the first information frame. The first default value is 0. The value corresponding to the BIP parity bit in the first information frame, i.e., the value corresponding to the first BIP parity bit, is calculated according to the T1 timestamp value, the T2 timestamp value and the T3 timestamp value in the first information frame, and the value corresponding to the first BIP parity bit is filled in the position of the BIP4 parity bit corresponding to the first information frame to form the corresponding first information frame.

The master mode start instruction refers to an instruction to start the delay measurement module in the master terminal. In the embodiment, the master mode start instruction may be defined by using a 2-bit signal. In some embodiments, 10 represents the master mode start instruction. When the master terminal receives a signal of starting 10, the master terminal starts the delay measurement module thereof to start working.

In one embodiment, determining the data transmission delay according to the first timestamp value, the second timestamp value and the third timestamp value in the second information frame and the fourth timestamp value obtained in advance includes: in the case of receiving a preamble in the second information frame, obtaining a current timestamp value of a local clock, and taking the current timestamp value as the fourth timestamp value; identifying and extracting the first timestamp value, the second timestamp value and the third timestamp value in the second information frame; and calculating the fourth timestamp value, the first timestamp value, the second timestamp value and the third timestamp value in the second information frame based on a preset rule to obtain the data transmission delay.

The fourth timestamp value refers to the moment when the master terminal receives the preamble in the second information frame. In the embodiment, after receiving the second information frame, the master terminal identifies and extract the first timestamp value, the second timestamp value and the third timestamp value in the second information frame, and calculates the first timestamp value, the second timestamp value, the third timestamp value and the fourth timestamp value according to a pre-configured calculation formula to obtain a two-way delay between the master terminal and the slave terminal, i.e., obtain the corresponding data transmission delay.

In one embodiment, the calculating the fourth timestamp value, and the first timestamp value, the second timestamp value and the third timestamp value in the second information frame based on the preset rule to obtain the data transmission delay includes: determining a first one-way delay according to the first timestamp value and the second timestamp value in the second information frame and a pre-configured first preset deviation value; determining a second one-way delay according to the fourth timestamp value, the third timestamp value in the second information frame, and a pre-configured second preset deviation value; and determining the data transmission delay according to the first one-way delay and the second one-way delay.

The first preset deviation value and the second preset deviation value both refer to a deviation value between a local timer at the master terminal and a local timer at the slave terminal. In one embodiment, clock frequencies of the master terminal and the slave terminal are the same, and it is assumed that the first preset deviation value and the second preset deviation value are the same, both of which are fixed values $\Delta T$. In the embodiment, the first one-way delay refers to a delay from the master terminal to the slave terminal, which is denoted as $t_1$. The second one-way delay refers to the delay from the slave terminal to the master terminal, which is denoted as $t_2$. After obtaining all the information in the second information frame, the master terminal identifies the first timestamp value, the second timestamp value and the third timestamp value in the second information frame, locally records the fourth timestamp value, and respectively denotes the four timestamp values as T1, T2, T3 and T4, and obtains the corresponding first one-way delay according to the delay from the master terminal to the slave terminal that $t_1 = $ T2 - T1 - $\Delta T$; obtains the corresponding second one-way delay according to the delay from the slave terminal to the master terminal that $t_2 = $ T4 - T3 + $\Delta T$; and finally obtains the data transmission delay according to the data transmission delay that $2t_{delay} = t_1 + t_2$, i.e., $2t_{delay} = $ T2 - T1 + T4 - T3.

In one embodiment, in the case that a frame length of the first information frame exceeds a length of the first preset overhead byte, the transmitting the first preset overhead byte carrying the first information frame to the slave terminal includes: decomposing the first information frame into a plurality of preset bits; and sequentially transmitting the first timestamp value, the second timestamp value, the third timestamp value and a first BIP parity bit in the first information frame to the slave terminal according to the preset bits.

In the embodiment, in the case that the master terminal monitors the arrival of the preselected first preset overhead byte of one frame of STM data in the data stream, the first information frame is interpolated into the first preset overhead byte and transmitted to the slave terminal along with the data stream. If the frame length of the first information frame exceeds the length of the first preset overhead byte, the data information in the first information frame may be transmitted to the slave terminal in batches, i.e., waiting for the arrival of the preselected first preset overhead byte of each frame of STM data in batches, and interpolating the same into preset bits in the first information frame in sequence until all the data information of the first information frame is transmitted to the slave terminal. In one embodiment, the first timestamp value, the second timestamp value, the third timestamp value and the first BIP parity bit in the first information frame may be sequentially transmitted to the slave terminal according to the preset bits. Before transmitting the first timestamp value in the first information frame to the slave terminal, the preamble in the first information frame is transmitted to the slave terminal first.

In some embodiments, assuming that the frame length of the first information frame is 66 bits and 2 bits in the first preset overhead byte are used to transmit the first information frame, then the first information frame is decomposed into 2 bits, and the first timestamp value, the second timestamp value, the third timestamp value and the first BIP parity bit in the first information frame are sequentially transmitted to the slave terminal according to 2 bits per transmission. In other words, only when the master terminal transmits 33 first preset overhead bytes to the slave terminal can all the data of the first information frame be transmitted to the slave terminal.

In one embodiment, after the transmitting the first preset overhead byte carrying the first information frame to the slave terminal, and before the receiving the second preset overhead byte carrying the second information frame fed back from the slave terminal, the method further includes: determining whether a preset number of frame intervals is received.

In the embodiment, when the master terminal monitors the header of the second information frame, in order to ensure that the monitored header is the header of the information frame, it is determined whether a preset number of frame intervals is received before receiving the second preset overhead byte carrying the second information frame fed back from the slave terminal. If the preset number of frame intervals is received, it indicates that the monitored frame header is the frame header of the information frame. The values of bit-0 and bit-1 of the frame intervals may both be 0; or, the bit-0 is 0 and the bit-1 is 1; or, the bit-0 is 1 and the bit-1 is 0. The number of the frame intervals is related to the frame length of the second information frame. In some embodiments, assuming that the frame length of the second information frame is 66 bits, the number of the frame intervals may be 33, that is, only when the master terminal receives at least 33 frame intervals can it be considered that the header of the information frame is monitored.

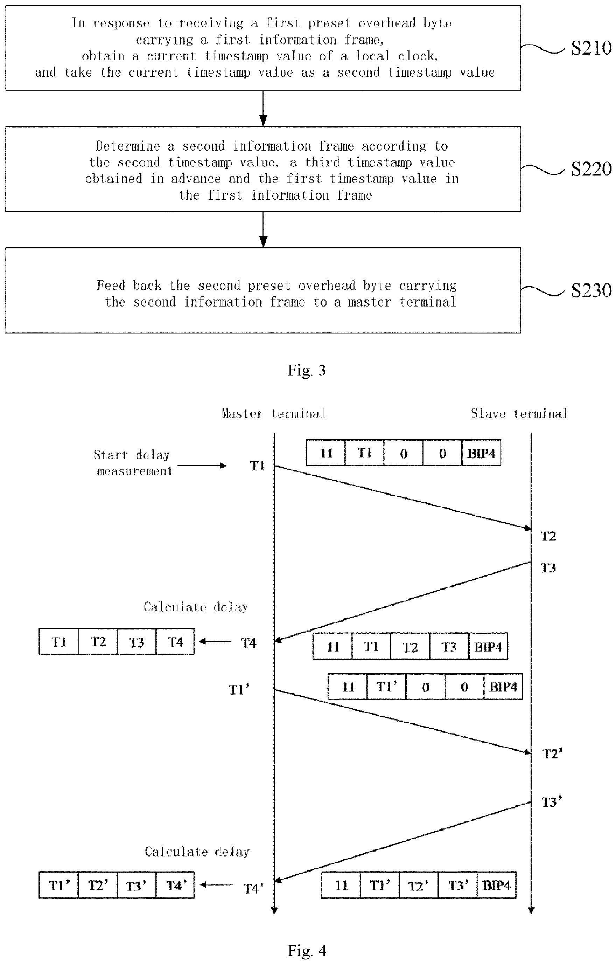

FIG. 3 is a flowchart of another delay measurement method provided by an embodiment of the present application. This embodiment is applied to long-distance optical fiber communication, and the delay between two chips is measured based on the SDH protocol. This embodiment is executed by a slave terminal, wherein the slave terminal refers to a terminal receiving delay measurement. In the embodiment, the slave terminal may be a device containing a delay measurement module, and in some embodiments, the device may be a chip, which is not limited. As shown in FIG. 3, the delay measurement method in this embodiment includes steps of S210, S220 and S230.

At 5210, in response to receiving a first preset overhead byte carrying a first information frame, a current timestamp value of a local clock is obtained, and the current timestamp value is taken as a second timestamp value.

In the embodiment, when the slave terminal receives a preamble in the first information frame, the current timestamp value of the local clock is recorded, and the current timestamp value is taken as the second timestamp value.

At S220, a second information frame is determined according to the second timestamp value, a third timestamp value obtained in advance and the first timestamp value in the first information frame.

The third timestamp value refers to the moment when the preamble in the second information frame is interpolated into the second preset overhead byte. In the embodiment, after receiving the preamble in the first information frame, the slave terminal continues to receive other information in the first information frame, and carries out BIP check on the information in the first information frame after receiving the first timestamp value, the second timestamp value and the third timestamp value in the first information frame. If the check result is correct, when the second preset overhead byte in the data stream arrives, the second information frame is interpolated into the second preset overhead byte, the current timestamp value of the local clock is recorded, and the moment when the preamble in the second information frame is interpolated into the second preset overhead byte is used as the third timestamp value. After that, the current timestamp value of the preamble in the first information frame received, i.e., the second timestamp value, is filled into the position of the T2 timestamp value in the second information frame, the preamble in the second information frame is interpolated into the second preset overhead byte, i.e., the T3 timestamp value is filled in the position of the T3 timestamp value in the second information frame, and the first timestamp value in the first information frame is filled into the position of the T1 timestamp value in the second information frame. Moreover, the value corresponding to the BIP4 parity bit in the second information frame is determined according to the first timestamp value, the second timestamp value and the third timestamp value in the second information frame to form the corresponding second information frame.

At S230, the second preset overhead byte carrying the second information frame is feed back to a master terminal.

In one embodiment, the second information frame is used for enabling the master terminal to determine the data transmission delay. In the embodiment, after the slave terminal end determines the second information frame, the second information frame is interpolated into the second preset overhead byte and fed back to the master terminal along with the data stream, so that the master terminal determines the corresponding data transmission delay according to the first timestamp value, the second timestamp value, the third timestamp value and the fourth timestamp value in the second information frame. The process of determining the data transmission delay may refer to the corresponding description of the master terminal, and will not be repeated here.

In one embodiment, before the receiving the first preset overhead byte carrying the first information frame, the method further includes: receiving a slave mode start instruction.

In the embodiment, the slave mode start instruction and the master mode start instruction are started at the same time, that is, the delay measurement modules in the master terminal and the slave terminal work at the same time. The slave mode start instruction may be defined by a 2-bit signal, for example, 01 indicates the slave mode start instruction and 00 indicates a measurement stop instruction. In the embodiment, when the slave terminal receives the start instruction of 01, the slave terminal starts the delay measurement module thereof to start working.

In one embodiment, determining the corresponding second information frame according to the second timestamp value, the third timestamp value obtained in advance, and the first timestamp value in the first information frame includes: determining a corresponding second BIP parity bit according to the second timestamp value, the first timestamp value in the first information frame and the third timestamp value obtained in advance; and determining the corresponding second information frame according to the second timestamp value, the first timestamp value in the first information frame, the third timestamp value obtained in advance, the second BIP parity bit and the pre-configured preamble.

In the embodiment, the first timestamp value in the second information frame is the same as the first timestamp value in the first information frame, and the second timestamp value and the third timestamp value

11            EP 3 955 528 B1            12

in the second information frame are respectively different from the corresponding second timestamp value and the third timestamp value in the first information frame. The slave terminal carries out XOR on the second timestamp value and the third timestamp value acquired thereof, and the first timestamp value in the first information frame, so as to obtain the value corresponding to the corresponding second BIP parity bit, and fill the value in the position corresponding to the BIP parity bit in the second information frame, so as to obtain the corresponding second information frame.

In one embodiment, in the case that a frame length of the second information frame exceeds a length of the second preset overhead byte, the feeding back the second preset overhead byte carrying the second information frame to the master terminal includes: decomposing the second information frame into a plurality of preset bits; and sequentially feeding back a first timestamp value, a second timestamp value, a third timestamp value and a second BIP parity bit in the second information frame according to the preset bits.

In the embodiment, in the case that the slave terminal monitors the arrival of the preselected second preset overhead byte of one frame of STM data in the data stream, the second information frame is interpolated into the second preset overhead byte and transmitted to the master terminal along with the data stream. If the frame length of the second information frame exceeds the length of the second preset overhead byte, the data information in the second information frame may be transmitted to the master terminal in batches, i.e., waiting for the arrival of the preselected second preset overhead byte of each frame of STM data in batches, and interpolating the same into preset bits in the second information frame in sequence until all the data information of the second information frame is fed back to the master terminal. In one embodiment, the first timestamp value, the second timestamp value, the third timestamp value and the second BIP parity bit in the second information frame may be sequentially transmitted to the master terminal according to the preset bits. Before transmitting the first timestamp value in the second information frame to the master terminal, the preamble in the second information frame is transmitted to the master terminal first.

In some embodiments, assuming that the frame length of the second information frame is 66 bits and 2 bits in the second preset overhead byte are used to transmit the second information frame, then the second information frame is decomposed into 2 bits, and the first timestamp value, the second timestamp value, the third timestamp value and the second BIP parity bit in the second information frame are sequentially transmitted to the master terminal according to 2 bits per transmission. In other words, only when the slave terminal transmits 33 second preset overhead bytes to the master terminal can all the data of the second information frame be transmitted to the master terminal.

In one embodiment, before the receiving the first preset overhead byte carrying the first information frame, the method further includes: determining whether a preset number of frame intervals is received.

In the embodiment, when the slave terminal monitors the header of the first information frame, in order to ensure that the monitored header is the header of the information frame, it is determined whether a preset number of frame intervals is received before receiving the first preset overhead byte carrying the first information frame fed back from the master terminal. If the preset number of frame intervals is received, it indicates that the monitored frame header is the frame header of the information frame. The values of bit-0 and bit-1 of the frame intervals may both be 0; or, the bit-0 is 0 and the bit-1 is 1; or, the bit-0 is 1 and the bit-0 is 0. The number of the frame intervals is related to the frame length of the first information frame. In some embodiments, assuming that the frame length of the first information frame is 66 bits, the number of the frame intervals may be 33, that is, only when the slave terminal receives at least 33 frame intervals can it be considered that the header of the information frame is monitored.

FIG. 4 is a relationship diagram between a timestamp value and an information frame provided by the embodiment of the present application. In some embodiments, in each delay measurement process, four timestamp values, which are the first timestamp value, the second timestamp value, the third timestamp value and the fourth timestamp value respectively, need to be collected and recorded. The master terminal is configured with a chip A, and the slave terminal is configured with a chip B. As shown in FIG. 4, the first timestamp value, the second timestamp value, the third timestamp value and the fourth timestamp value are respectively represented by T1, T2, T3 and T4. T1 represents the moment when the master terminal transmits the first information frame, and is a count value of a local timer of the chip A. T2 represents the moment when the slave terminal receives the first information frame, and is a count value of a local timer of the chip B. T3 represents the moment when the slave terminal transmits the second information frame, and is a count value of the local timer of the chip B. T4 represents the moment when the master terminal receives the second information frame, and is a count value of the local timer of the chip A. The local counter and the local clock have the same functions, both of which are used to record the current time as the current timestamp value. The preamble in the first information frame is 11, the first timestamp value is T1, and the second timestamp value and the third timestamp value are 0. The preamble in the second information frame is 11, the first timestamp value is T1, the second timestamp value is T2, and the third timestamp value is T3. T1, T2, T3 and T4 are transmitted to the delay calculating module to obtain the corresponding data transmission delay by calculation. Similarly, during the second delay measurement, the first timestamp value, the second timestamp value, the third timestamp value and the fourth timestamp value are recorded again. For example, in the second delay measurement in FIG. 4, the first timestamp value, the second timestamp value, the third timestamp value and the fourth timestamp value are T1', T2', T3' and T4' respectively. Moreover, T 1', T2', T3' and T4' are transmitted to the delay calculating module to obtain the corresponding data transmission delay corresponding to the second delay measurement.

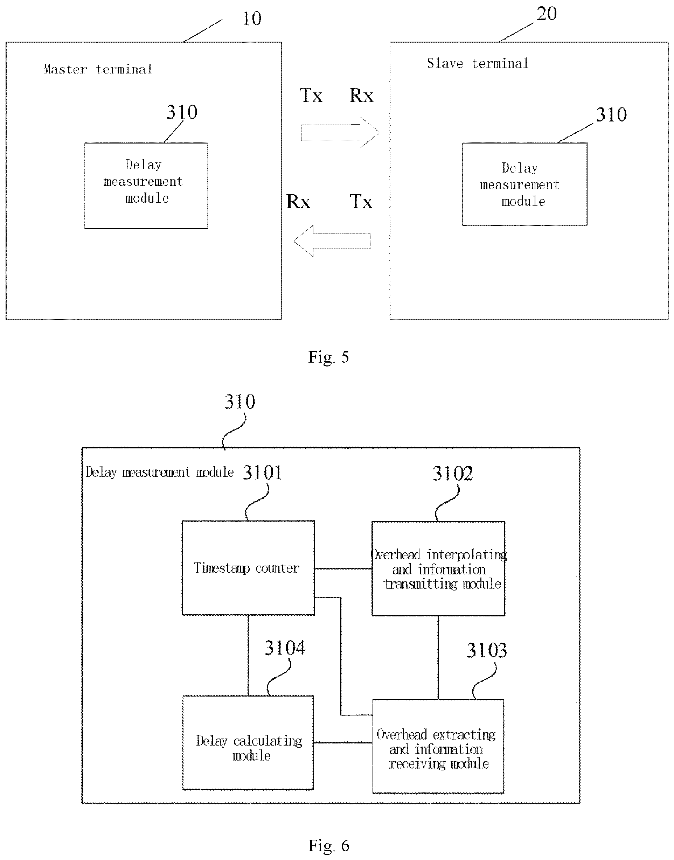

FIG. 5 is a structural block diagram of a delay measurement system provided by an embodiment of the present application. The delay measurement system in this embodiment executes the delay measurement methods in the foregoing embodiments so as to calculate the data transmission delay between the master terminal and the slave terminal. As shown in FIG. 5, the delay measurement system in this embodiment includes: a master terminal 10 and a slave terminal 20, wherein the master terminal 10 and the slave terminal 20 contain a same delay measurement module 310. The master terminal 10 is configured with a chip A, and the slave terminal 20 is configured with a chip B. In the process of transmitting a first information frame from the master terminal 10 to the slave terminal 20, the master terminal 10 serves as a transmitting terminal Tx and the slave terminal 20 serves as a receiving terminal RX. In the process of feeding back a second information frame from the slave terminal 20 to the master terminal 10, the slave terminal 20 serves as the transmitting terminal Tx and the master terminal 10 serves as the receiving terminal Rx.

FIG. 6 is a structural block diagram of a delay measurement module provided by the embodiment of the present application. As shown in FIG. 6, the delay measurement module 310 includes: a timestamp counter 3101, an overhead interpolating and information transmitting module 3102, an overhead extracting and information receiving module 3103 and a delay calculating module 3104.

The timestamp counter 3101 is respectively connected with the overhead interpolating and information transmitting module 3102, the overhead extracting and information receiving module 3103 and the delay calculating module 3104. The overhead interpolating and information transmitting module 3102 is connected with the overhead extracting and information receiving module 3103. The overhead extracting and information receiving module 3103 is connected with the delay calculating module 3104.

The timestamp counter 3101 is configured for providing a timestamp value collection to the overhead interpolating and information transmitting module 3102, the overhead extracting and information receiving module 3103 and the delay calculating module 3104 in real time, and the timestamp value collection at least includes one of the followings: a first timestamp value, a second timestamp value, a third timestamp value and a fourth timestamp value.

The overhead interpolating and information transmitting module 3102 is configured for generating a first information frame and a second information frame, interpolating the first information frame into a first preset overhead byte, and interpolating the second information frame into a second preset overhead byte, and the first preset overhead byte and the second preset overhead byte are both an overhead byte in a synchronous digital hierarchy SDH protocol.

The overhead extracting and information receiving module 3103 is configured for monitoring and receiving the first preset overhead byte and the second preset overhead byte, and in the case that the first preset overhead byte or the second preset overhead byte contains the first information frame or the second information frame, identifying and extracting the first information frame or the second information frame from the first preset overhead byte or the second preset overhead byte.

The delay calculating module 3104 is configured for obtaining a corresponding data transmission delay according to the first timestamp value, the second timestamp value and the third timestamp value in the second information frame and the fourth timestamp value obtained in advance.

In the embodiment, the delay measurement system includes two or more chips containing the same delay measurement module 310. As shown in FIG. 5, take the delay measurement system including two chips as an example, which are respectively chip A and chip B. As shown in FIG. 6, each delay measurement module 310 includes: a timestamp counter 3101, an overhead interpolating and information transmitting module 3102, an overhead extracting and information receiving module 3103 and a delay calculating module 3104. The timestamp counter 3101 is configured for providing a timestamp value collection to the other three modules, and transmitting the timestamp value to the overhead interpolating and information transmitting module 3102, the overhead extracting and information receiving module 3103 and the delay calculating module 3104 in real time. The overhead interpolating and information transmitting module 3102 is configured for generating a first information frame and a second information frame, interpolating the first information frame into a first preset overhead byte in a data scream, and interpolating the second information frame into a second preset overhead byte in the data stream and transmitting the information frame to the receiving terminal along with the data stream. The overhead extracting and information receiving module 3103 is configured for monitoring values of the first preset overhead byte and the second preset overhead byte in the data stream, extracting the data information in the first information frame and the second information frame from the data stream when the first information frame and the second information frame arrive, and carrying out BIP4 check, and transmitting the four timestamp values in the second information frame received to the delay calculating module 3104 if the check result is correct. The delay calculating module 3104 is configured for obtaining a data transmission delay between the chip A and the chip B according to the four timestamp values received and a preset calculation formula.

In one embodiment, the delay measurement method may include the following steps of S10, S20, S30, S40 and S50:

At S10, the corresponding delay measurement modules in the master terminal and the slave terminal are started, by a user at the same time through the start instructions.

In the embodiment, the instructions for starting the master terminal and the slave terminal may be defined by 2-bit signals, for example, when 2-bit is 10, it is a master mode start instruction, when 2-bit is 01, it is a slave mode start instruction, and when 2-bit is 00, it is a measurement stop instruction.

At 520, when the master terminal receives the start instruction and the pre-selected overhead byte in the data stream arrives, the current timestamp value is recorded as the first timestamp value T1, an information frame 1 is formed, and the information frame 1 is transmitted to the slave terminal.

The information frame 1 refers to the first information frame in the foregoing embodiments. T1, 0 and 0 are respectively filled in the positions of the T1, T2 and T3 timestamp values in the first information frame.

In the embodiment, when the preselected reserved overhead byte of one frame of STM data in the data stream arrives, the data information in the information frame 1 is interpolated into the position of the reserved overhead byte and transmitted to the slave terminal. In the case that a bit width of the information frame 1 is larger than that of the reserved byte, partial bits of the information frame 1 may be interpolated in batches after the pre-selected reserved overhead bytes of each one frame of STM data arrive, until the data information in the complete information frame 1 is transmitted to the slave terminal.

At S30, a value of the preselected reserved overhead byte in the data stream is monitored by the slave terminal after receiving the start instruction, and is recorded as the second timestamp value T2, and an information frame 2 is formed.

In the embodiment, the slave terminal starts to monitor the value of the preselected reserved overhead byte in the data stream after receiving the start instruction, when monitoring that the value of this reserved overhead byte is a frame header of the information frame 1, records this moment as the second timestamp value T2, then continues to receive the information frame 1 until the complete information frame 1 is collected, and checks whether the information frame 1 is correct. If the check result is correct, a frame header of a new information frame 2 is interpolated when the reserved overhead byte in the data stream arrives, and meanwhile, the timestamp value at this moment is recorded as the third timestamp value T3. The received T1 and the prerecorded T2 and T3 are combined into an information frame 2, and the information frame 2 is interpolated into the data stream when the reserved overhead byte in the data stream arrives, and the information frame 2 is transmitted to the master terminal along with the data stream.

At S40, the information frame 2 is received by the master terminal, and the moment when the frame header of the information frame 2 is received is taken as the fourth timestamp value T4.

In the embodiment, after the master terminal finishes transmitting the information frame 1, the master terminal starts to wait for receiving the data of the information frame 2 data transmitted by the slave terminal. When the master terminal monitors the frame header of the information frame 2 transmitted by the slave end, the master terminal records the timestamp value at this moment as the fourth timestamp value T4. Then, the master terminal continues to receive the rest data of the information frame 2, and checks the information frame 2 after the master terminal finishes receiving all the data of the information frame 2; and after the check result is correct, calculates the corresponding data transmission delay by using T1, T2 and T3 in the information frame 2 and T4 recorded in advance.

At S50, the data transmission delay is calculated.

In the embodiment, clock frequencies of the master terminal and the slave terminal are consistent, and a delay from the master terminal to the slave terminal is $T2 + \Delta T - T1$, assuming that a deviation of timestamp counters at both ends is a fixed value $\Delta T$; and a delay from the slave terminal to the master terminal is $T4 - T3 - \Delta T$. Correspondingly, a sum of two-way delay between the master terminal and the slave terminal is that $2t_{delay} = T2 + \Delta T - T1 + T4 - T3 - \Delta T = T2 - T1 + T4 - T3$.

In the embodiment, in order to improve the measurement accuracy, n groups of T1, T2, T3 and T4 may be measured, and then the corresponding n $2t_{delay}$ may be obtained, and then the average value may be obtained.

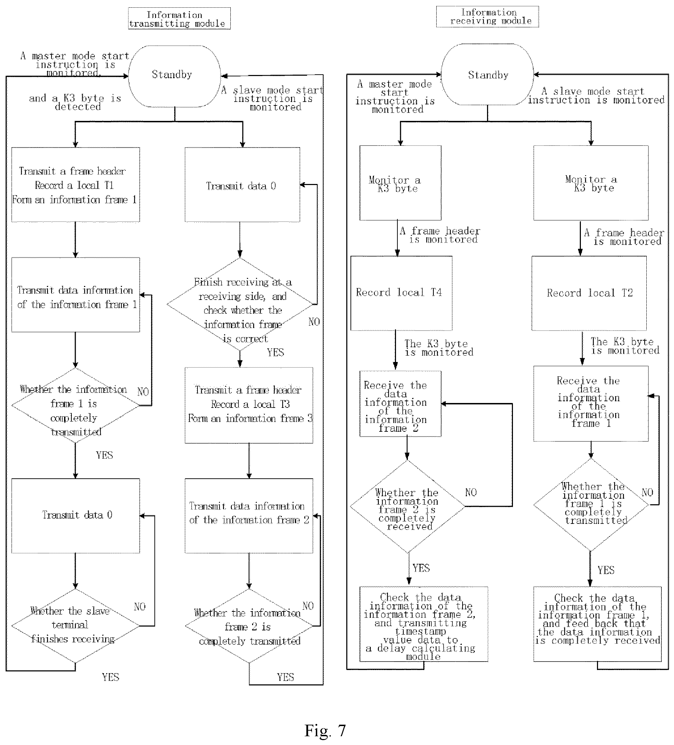

FIG. 7 is a schematic diagram of status transition between the master terminal and the slave terminal in the delay measurement process provided by the embodiment of the present application. In the embodiment, the status transition process between the master terminal and the slave terminal is explained by taking the first preset overhead byte and the second preset overhead byte as K3 bytes as an example, bit-0 and bit-1 of a K3 overhead byte in an STM frame format in an SDH protocol are used to transmit delay measurement information frames (i.e. the first information frame and the second information frame in the above embodiments). In the measurement process, on one hand, delay measurement is started and stopped according to external instructions, and the measured timestamp value is acquired. On the other hand, the timestamp information is extracted from the K3 reserved byte in the data stream or interpolated into the K3 reserved byte in the data stream.

In some embodiments, a count of the local clock is used as a TimeStamp, a resolution of the counter is <=1 us, a bit width of the counter is 20 bits (a guarantee period is greater than 1 s), and the count is automatically cleared and recalculated after the counter is full. During measurement, two chips with the same clock frequency are needed to ensure the delay measurement accuracy.

In the embodiment, the first timestamp value, the second timestamp value, the third timestamp value and the fourth timestamp value are respectively represented by T1, T2, T3 and T4. The first information frame and the second information frame are respectively represented with information frame 1 and information frame 2.

As shown in FIG. 7, the status transition process of a transmitting module and a receiving module in the embodiment are as follows:

In step one, the master terminal is started, after receiving the master mode start instruction, the current timestamp value is recorded as the first timestamp value T1 when the K3 byte arrives in the data stream, and forms the information frame 1, wherein the positions of T1 to T3 are respectively filled with T1, 0 and 0, and the preamble of the information frame 1 is interpolated into the reserved K3 byte in the data stream (for example, the preamble is 2 bits and the preamble is 11) and transmitted to the slave terminal along with the data stream.

In step two, according to the T1 value filled in the T1 position and 0 filled in the T2 and T3 positions in the information frame 1, a 4-bit parity bit value, i.e., a BIP4 parity bit value is calculated, and then the information frame 1 is formed. When the K3 byte comes in the subsequent data stream, the remaining information of the information frame 1 is interpolated into the K3 byte from T1 to BIP4 in sequence and then transmitted to the slave terminal.

In step three, one end of the slave terminal is started, and the information frame 1 transmitted by the master terminal is awaited. The value of the K3 byte in the data stream is monitored all the time. When it is monitored that the frame length of the information frame 1 (assuming that the frame length of the information frame 1 is 66-bit, after receiving more than 33 K3 bytes with bit-0 and bit-1 values of 0, and receiving one K3 byte with bit-0 and bit-1 values of 1, it is considered that the frame header of the information frame has been received), the current timestamp value of the slave terminal is extracted, and the current timestamp value is taken as T2.

In step four, the remaining information in the information frame 1 is continuously received, and after receiving all the information in the information frame 1, BIP4 check is carried out on the information frame 1.

In step five, if the check result is correct, the frame header information of the information frame 2 is interpolated when the K3 byte in the data stream arrives, and the current timestamp value is recorded as T3. If the check result is incorrect, the data of the information frame 1 is discarded, and then, return back to step three to wait for receiving next information frame 1.

In step six, the received T1 in the information frame 1 and the locally recorded T2 and T3 are combined into an information frame 2, and the information frame 2 is interpolated into the data stream when the K3 byte in the subsequent data stream arrives, and transmitted to the master terminal.

In step seven, after transmitting the information frame 1, the master terminal continuously monitors the value of the K3 byte in the data stream, and when the frame header of the information frame 2 transmitted by the slave terminal is monitored, the current timestamp value is recorded as T4.

In step eight, the remaining information in the information frame 2 is continuously received, and after receiving all the information in the information frame 2, BIP4 check is carried out on the information frame 2.

If the check result is correct, T1, T2 and T3 in the information frame 2 and locally recorded T4 are together transmitted to the delay calculating module. If the check result is incorrect, all data is discarded, and then, return to step one.

In step nine, after receiving T1, T2, T3 and T4, the delay calculating module uses the calculation formula of $2t_{delay}$ to obtain the corresponding data transmission delay by calculation.

$$2t_{delay} = T2 - T1 + T4 - T3.$$

According to the embodiment, the data transmission delay between the transmission chips is accurately measured based on a high-precision delay measurement method between SDH communication protocol chips. Meanwhile, the technical scheme has high delay measurement accuracy, which can reach ns level in theory, and reduces the measurement error introduced by external devices and the measurement error introduced when parsing messages. At the same time, using overhead reserved bytes instead of monopolizing some bytes of frame payload can save resources and improve the data transmission efficiency without affecting the communication of a main data stream. Meanwhile, the overhead reserved bytes are transmitted along with the main data stream, which can reflect the transmission delay of the main data stream in real time. Moreover, the accuracy and stability of the measured values are ensured by using the special overhead reserved bytes to form the corresponding information frame format.

The embodiments of the present invention also provide a storage medium containing a computer-executable instruction that, when executed by a computer processor, executes a delay measurement method. The method is applied to a master terminal, and the method includes: determining a corresponding first information frame according to a first timestamp value obtained in advance; transmitting a first preset overhead byte carrying the first information frame to a slave terminal, wherein the first preset overhead byte is an overhead byte in a synchronous digital hierarchy SDH protocol; receiving a second preset overhead byte carrying a second information frame fed back from the slave terminal, wherein the second preset overhead byte is an overhead byte in the SDH protocol; and determining a corresponding data transmission delay according to the first timestamp value, a second timestamp value and a third timestamp value in the second information frame and a fourth timestamp value obtained in advance.

The embodiments of the present invention also provide a storage medium containing a computer-executable instruction that, when executed by a computer processor, executes a delay measurement method. The method is applied to a slave terminal, and the method includes: in the case of receiving a first preset overhead byte carrying a first information frame, obtaining a current timestamp value of a local clock, and taking the current timestamp value as a second timestamp value; determining a corresponding second information frame according to the second timestamp value, a third timestamp value obtained in advance and the first timestamp value in the first information frame, wherein the third timestamp value is the moment when a preamble in the second information frame is interpolated into a second preset overhead byte; and feeding back the second preset overhead byte carrying the second information frame to a master terminal, wherein the second information frame is used for enabling the master terminal to determine a corresponding data transmission delay.

A user device covers any suitable type of wireless user devices, such as a mobile phone, a portable data processing device, a portable web browser or a vehicle-mounted mobile station.

Various embodiments of the present application may be implemented in hardware or dedicated circuits, software, logic, or any combination thereof. For example, some aspects may be implemented in hardware, while other aspects may be implemented in firmware or software that may be executed by a controller, microprocessor or other computing device, although the present application is not limited thereto.

The embodiments of the present application may be implemented by executing computer program instructions via a data processor of a mobile device, for example, in a processor entity, or by hardware, or by a combination of software and hardware. The computer program instructions may be assembly instructions, Instruction Set Architecture (ISA) instructions, machine instructions, machine-related instructions, microcode, firmware instructions, status setting data, or source codes or object codes written in any combination of one or more programming languages.

The block diagram of any logic flow in the drawings of the present application may represent program steps, or may represent interconnected logic circuits, modules and functions, or may represent a combination of program steps and logic circuits, modules and functions. A computer program may be stored in the memory. The memory may be of any type suitable for local technical environment and may be implemented using any suitable data storage technology, such as Read-Only Memory (ROM), Random Access Memory (RAM), optical memory device and system (Digital Video Disc (DVD) or Compact Disk (CD)), and the like. The computer readable medium may include a non-transitory storage medium. A data processor may be any type suitable for the local technical environment, such as a general-purpose computer, a special-purpose computer, a microprocessor, a Digital Signal Processor (DSP), an Application Specific Integrated Circuit (ASIC), a Field-Programmable Gate Array (FPGA), and a processor based on a multi-core processor architecture.

## Claims

1. A delay measurement method, applied to a master terminal, comprising:

   determining at the master terminal (S110) a first information frame according to a first timestamp value obtained in advance;
   transmitting by the master terminal (S120) a first preset overhead byte carrying the first information frame to a slave terminal, wherein the first information frame carries the first timestamp value, and the first preset overhead byte is an overhead byte in a Synchronous Digital Hierarchy, SDH, protocol;
   receiving at the master terminal (5130) a second preset overhead byte carrying a second information frame fed back from the slave terminal, wherein the second preset overhead byte is an overhead byte in the SDH protocol; and
   determining at the master terminal (S140) a data transmission delay according to the first timestamp value, a second timestamp value and a third timestamp value carried in the second information frame and a fourth timestamp value obtained in advance;
   wherein, the first timestamp value, the second timestamp value, the third timestamp value and the fourth timestamp value are determined by:

      obtaining at the master terminal a current timestamp value of a local clock of the master terminal, and taking the current timestamp value as the first timestamp value corresponding to the first information frame, in response to receiving a master mode start instruction and monitoring the arrival of the first preset overhead byte in a data stream;
      in response to receiving at the slave terminal the first preset overhead byte carrying the first information frame, obtaining (S210) at the slave terminal a current timestamp value of a local clock of the slave terminal, and taking the current timestamp value as the second timestamp value;

determining at the slave terminal the third timestamp value as the moment when a preamble in the second information frame is interpolated into the second preset overhead byte by the slave terminal; and

obtaining at the master terminal a current timestamp value of another local clock of the master terminal, and taking the current timestamp value as the fourth timestamp value, in response to receiving the preamble in the second information frame.

2. The method of claim 1, wherein determining the master terminal (S110) the first information frame according to the first timestamp value obtained in advance comprises:

obtaining at the master terminal a current timestamp value of a local clock, and taking the current timestamp value as the first timestamp value corresponding to the first information frame, in response to receiving a master mode start instruction and monitoring the arrival of the first preset overhead byte in a data stream;

determining a first Bit Interleaved Parity, BIP, parity bit according to the first timestamp value and a pre-configured second timestamp value and a pre-configured third timestamp value, wherein the pre-configured second timestamp value and the pre-configured third timestamp value are both a first preset value; and

determining the first information frame according to the first timestamp value corresponding to the first information frame, the pre-configured second timestamp value, the pre-configured third timestamp value, the first BIP parity bit and a pre-configured preamble.

3. The method of claim 1, wherein determining at the master terminal the data transmission delay according to a first timestamp value, a second timestamp value and a third timestamp value in the second information frame and a fourth timestamp value obtained in advance comprises:

obtaining at the master terminal the current timestamp value of the another local clock, and taking the current timestamp value as the fourth timestamp value, in response to receiving the preamble in the second information frame;

identifying and extracting the first timestamp value, the second timestamp value and the third timestamp value in the second information frame; and

calculating the fourth timestamp value, and the first timestamp value, the second timestamp value and the third timestamp value in the second information frame based on a preset rule to obtain the data transmission delay.

4. The method of claim 3, wherein calculating the fourth timestamp value, and the first timestamp value, the second timestamp value and the third timestamp value in the second information frame based on a preset rule to obtain the data transmission delay comprises:

determining a first one-way delay according to the first timestamp value and the second timestamp value in the second information frame and a pre-configured first preset deviation value;

determining a second one-way delay according to the fourth timestamp value, the third timestamp value in the second information frame, and a pre-configured second preset deviation value; and

determining the data transmission delay according to the first one-way delay and the second one-way delay.

5. The method of claim 1, wherein in response to a frame length of the first information frame exceeding a length of the first preset overhead byte, transmitting the first preset overhead byte carrying the first information frame to the slave terminal comprises:

decomposing the first information frame into a plurality of preset bits; and

sequentially transmitting the first timestamp value, the second timestamp value, the third timestamp value and a first BIP parity bit in the first information frame to the slave terminal according to the preset bits.

6. The method of claim 1, wherein after transmitting the first preset overhead byte carrying the first information frame to the slave terminal, and before receiving the second preset overhead byte carrying the second information frame fed back from the slave terminal, the method further comprises:

determining whether a preset number of frame intervals is received.

7. A delay measurement method, applied to a slave terminal, comprising:

in response to receiving the slave terminal a first preset overhead byte carrying a first information frame, wherein the first information frame carries a first timestamp value, and the first preset overhead byte is an overhead byte in a Synchronous Digital Hierarchy, SDH, protocol, obtaining (S210) a current timestamp value of a local clock, and taking the current timestamp value as a second timestamp value;

determining at the slave terminal (S220) a second information frame according to the second timestamp value, a third timestamp value obtained in advance and the first timestamp value carried in the first information frame, wherein the third timestamp value is the moment when a preamble in the second information frame is interpolated into a second preset overhead byte in the SDH protocol; and

feeding back by the slave terminal (S230) the second preset overhead byte carrying the second information frame to a master terminal, wherein the second information frame is used for enabling the master terminal to determine a data transmission delay; wherein the second information frame carries the first timestamp value, the second timestamp value and the third timestamp value, and the master terminal is configured to determine the data transmission delay according to the first timestamp value, the second timestamp value, the third timestamp value and the fourth timestamp value; and

the first timestamp value and the fourth timestamp value are determined at the master terminal by: obtaining at the master terminal a current timestamp value of a local clock of the master terminal, and taking the current timestamp value as the first timestamp value corresponding to the first information frame, in response to receiving a master mode start instruction and monitoring the arrival of the first preset overhead byte in a data stream; and

obtaining at the master terminal a current timestamp value of another local clock of the master terminal, and taking the current timestamp value as the fourth timestamp value, in response to receiving the preamble in the second information frame.

8. The method of claim 7, wherein before receiving at the slave terminal the first preset overhead byte carrying the first information frame, the method further comprises:
   receiving a slave mode start instruction.

9. The method of claim 7, wherein determining at the slave terminal the second information frame according to the second timestamp value, the third timestamp value obtained in advance and the first timestamp value in the first information frame comprises:

   determining a second Bit Interleaved Parity, BIP, parity bit according to the second timestamp value, the first timestamp value in the first information frame and the third timestamp value obtained in advance; and

   determining the second information frame according to the second timestamp value, the first timestamp value in the first information frame, the third timestamp value obtained in advance, the second BIP parity bit and the pre-configured preamble.

10. The method of claim 7, wherein in response to a frame length of the second information frame exceeding a length of the second preset overhead byte, feeding back the second preset overhead byte carrying the second information frame to the master terminal comprises:

    decomposing the second information frame into a plurality of preset bits; and
    sequentially feeding back a first timestamp value, a second timestamp value, a third timestamp value and a second BIP parity bit in the second information frame according to the plurality of preset bits.

11. The method of claim 7, wherein before receiving at the slave terminal the first preset overhead byte carrying the first information frame, the method further comprises:
    determining whether a preset number of frame intervals is received.

12. A delay measurement system, comprising: a master terminal (10) and a slave terminal (20), wherein the master terminal (10) and the slave terminal (20) contain a same delay measurement module (310); and the delay measurement module (310) comprises a timestamp counter, an overhead interpolating and information transmitting module (3102), an overhead extracting and information receiving module (3103) and a delay calculating module (3104);

    the timestamp counter (3101) is respectively connected with the overhead interpolating and information transmitting module (3102), the overhead extracting and information receiving module (3103) and the delay calculating module (3104); the overhead interpolating and information transmitting module (3102) is connected with the overhead extracting and information receiving module (3103); and the overhead extracting and information receiving module (3103) is connected with the delay calculating module (3104);
    the timestamp counter (3101) is configured for providing a timestamp value collection to the overhead interpolating and information transmitting module (3102), the overhead extracting and information receiving module (3103) and the delay calculating module (3104) in real time, and the timestamp value collection comprises at least one of the followings: a first timestamp value, a second timestamp value, a third timestamp value and a fourth timestamp value;

the overhead interpolating and information transmitting module (3102) is configured for generating a first information frame and a second information frame, interpolating the first information frame into a first preset overhead byte, and interpolating the second information frame into a second preset overhead byte, and the first preset overhead byte and the second preset overhead byte are both an overhead byte in a Synchronous Digital Hierarchy, SDH, protocol; the overhead extracting and information receiving module (3103) is configured for monitoring and receiving the first preset overhead byte and the second preset overhead byte, and in response to the first preset overhead byte or the second preset overhead byte containing the first information frame or the second information frame, identifying and extracting the first information frame or the second information frame from the first preset overhead byte or the second preset overhead byte; and the delay calculating module (3104) is configured for obtaining a data transmission delay according to the first timestamp value, the second timestamp value and the third timestamp value in the second information frame and the fourth timestamp value obtained in advance; wherein, the first timestamp value, the second timestamp value, the third timestamp value and the fourth timestamp value are determined by:

> obtaining at the master terminal a current timestamp value of a local clock of the master terminal, and taking the current timestamp value as the first timestamp value corresponding to the first information frame, in response to receiving a master mode start instruction and monitoring the arrival of the first preset overhead byte in a data stream; in response to receiving the slave terminal the first preset overhead byte carrying the first information frame, obtaining (S210) a current timestamp value of a local clock of the slave terminal, and taking the current timestamp value as the second timestamp value;
> determining the slave terminal the third timestamp value as the moment when a preamble in the second information frame is interpolated into the second preset overhead byte by the slave terminal; and obtaining at the master terminal a current timestamp value of another local clock of the master terminal, and taking the current timestamp value as the fourth timestamp value, in response to receiving the preamble in the second information frame,

wherein the system is configured to perform the delay measurement method according to any one of claims 1 to 11.

13. A storage medium storing a computer program which, when executed by a processor, cause the processor to perform the delay measurement method according to any one of claims 1 to 11.

## Patentansprüche

1. Verzögerungsmessverfahren, das auf ein Master-Terminal angewendet wird, umfassend:Bestimmen, an dem Master-Terminal (S110), eines ersten Informationsrahmens gemäß einem vorab erhaltenen ersten Zeitstempelwert;

> Übertragen, durch das Master-Terminal (S120), eines ersten voreingestellten Overhead-Bytes, das den ersten Informationsrahmen trägt, an ein Slave-Terminal, wobei der erste Informationsrahmen den ersten Zeitstempelwert trägt und das erste voreingestellte Overhead-Byte ein Overhead-Byte in einem synchronen digitalen Hierarchie-, SDH-, Protokoll ist; Empfangen, an dem Master-Terminal (S130), eines zweiten voreingestellten Overhead-Bytes, das einen zweiten Informationsrahmen trägt, das aus dem Slave-Terminal zurückgeführt wird, wobei das zweite voreingestellte Overhead-Byte ein Overhead-Byte in dem SDH-Protokoll ist; und Bestimmen, an dem Master-Terminal (S140), einer Datenübertragungsverzögerung gemäß dem ersten Zeitstempelwert, einem zweiten Zeitstempelwert und einem dritten Zeitstempelwert, die in dem zweiten Informationsrahmen getragen werden, und einem vorab erhaltenen vierten Zeitstempelwert; wobei der erste Zeitstempelwert, der zweite Zeitstempelwert, der dritte Zeitstempelwert und der vierte Zeitstempelwert bestimmt werden durch:

>> Erhalten, an dem Master-Terminal, eines aktuellen Zeitstempelwerts einer lokalen Uhr des Master-Terminals und Nehmen des aktuellen Zeitstempelwerts als ersten Zeitstempelwert, der dem ersten Informationsrahmen entspricht, als Reaktion auf das Empfangen einer Master-Modus-Startanweisung und Überwachen des Eintreffens des ersten voreingestellten Overhead-Bytes in einem Datenstrom; als Reaktion auf das Empfangen, an dem Slave-Terminal, des ersten voreingestellten Overhead-Bytes, das den ersten Informationsrahmen trägt, Erhalten (S210), an dem Slave-Terminal, eines aktuellen Zeitstempelwerts einer lokalen Uhr des Slave-Terminals und Nehmen des aktuellen Zeitstempelwerts als zweiten Zeitstempelwert; Bestimmen, an dem Slave-Terminal, des dritten Zeitstempelwerts als den Zeitpunkt, zu dem eine Präambel in dem zweiten Informationsrahmen von dem Slave-Terminal in das zweite voreingestellte Overhead-Byte interpoliert wird; und Erhalten, an dem Master-Terminal, eines aktuellen Zeitstempelwerts einer anderen lokalen Uhr des Master-Terminals und Nehmen des aktuellen Zeitstempelwerts als vierten Zeitstempelwert als Reaktion auf das Empfangen der Präambel in dem zweiten Informationsrahmen.

2. Verfahren nach Anspruch 1, wobei das Bestimmen, an dem Master-Terminal (S110), des ersten Informationsrahmens gemäß dem vorab erhaltenen ersten Zeitstempelwert umfasst:

    Erhalten, an dem Master-Terminal, eines aktuellen Zeitstempelwerts einer lokalen Uhr und Nehmen des aktuellen Zeitstempelwerts als ersten Zeitstempelwert, der dem ersten Informationsrahmen entspricht, als Reaktion auf das Empfangen einer Master-Modus-Startanweisung und Überwachen des Eintreffens des ersten voreingestellten Overhead-Bytes in einem Datenstrom;
    Bestimmen eines ersten Bit Interleaved Parity-, BIP-, Paritätsbits gemäß dem ersten Zeitstempelwert und einem vorkonfigurierten zweiten Zeitstempelwert und einem vorkonfigurierten dritten Zeitstempelwert, wobei der vorkonfigurierte zweite Zeitstempelwert und der vorkonfigurierte dritte Zeitstempelwert beide ein erster voreingestellter Wert sind; und
    Bestimmen des ersten Informationsrahmens gemäß dem ersten Zeitstempelwert, der dem ersten Informationsrahmen entspricht, dem vorkonfigurierten zweiten Zeitstempelwert, dem vorkonfigurierten dritten Zeitstempelwert, dem ersten BIP-Paritätsbit und einer vorkonfigurierten Präambel.

3. Verfahren nach Anspruch 1, wobei das Bestimmen, an dem Master-Terminal, der Datenübertragungsverzögerung gemäß einem ersten Zeitstempelwert, einem zweiten Zeitstempelwert und einem dritten Zeitstempelwert in dem zweiten Informationsrahmen und einem vorab erhaltenen vierten Zeitstempelwert umfasst:

    Erhalten, an dem Master-Terminal, des aktuellen Zeitstempelwerts einer anderen lokalen Uhr und Nehmen des aktuellen Zeitstempelwerts als vierten Zeitstempelwert als Reaktion auf das Empfangen der Präambel in dem zweiten Informationsrahmen;
    Identifizieren und Extrahieren des ersten Zeitstempelwerts, des zweiten Zeitstempelwerts und des dritten Zeitstempelwerts in dem zweiten Informationsrahmen; und
    Berechnen des vierten Zeitstempelwerts und des ersten Zeitstempelwerts, des zweiten Zeitstempelwerts und des dritten Zeitstempelwerts in dem zweiten Informationsrahmen basierend auf einer voreingestellten Regel, um die Datenübertragungsverzögerung zu erhalten.

4. Verfahren nach Anspruch 3, wobei das Berechnen des vierten Zeitstempelwerts und des ersten Zeitstempelwerts, des zweiten Zeitstempelwerts und des dritten Zeitstempelwerts in dem zweiten Informationsrahmen basierend auf einer voreingestellten Regel zum Erhalten der Datenübertragungsverzögerung umfasst:

    Bestimmen einer ersten Einwegverzögerung gemäß dem ersten Zeitstempelwert und dem zweiten Zeitstempelwert in dem zweiten Informationsrahmen und einem vorkonfigurierten ersten voreingestellten Abweichungswert;
    Bestimmen einer zweiten Einwegverzögerung gemäß dem vierten Zeitstempelwert, dem dritten Zeitstempelwert in dem zweiten Informationsrahmen und einem vorkonfigurierten zweiten voreingestellten Abweichungswert; und
    Bestimmen der Datenübertragungsverzögerung gemäß der ersten Einwegverzögerung und der zweiten Einwegverzögerung.

5. Verfahren nach Anspruch 1, wobei als Reaktion darauf, dass eine Rahmenlänge des ersten Informationsrahmens eine Länge des ersten voreingestellten Overhead-Bytes überschreitet, das Übertragen des ersten voreingestellten Overhead-Bytes, das den ersten Informationsrahmen trägt, an das Slave-Terminal umfasst:

    Zerlegen des ersten Informationsrahmens in eine Vielzahl von voreingestellten Bits; und
    sequenzielles Übertragen des ersten Zeitstempelwerts, des zweiten Zeitstempelwerts, des dritten Zeitstempelwerts und eines ersten BIP-Paritätsbits in dem ersten Informationsrahmen an das Slave-Terminal gemäß den voreingestellten Bits.

6. Verfahren nach Anspruch 1, wobei nach dem Übertragen des ersten voreingestellten Overhead-Bytes, das den ersten Informationsrahmen trägt, an das Slave-Terminal und vor dem Empfangen des zweiten voreingestellten Overhead-Bytes, das den zweiten Informationsrahmen trägt, das von dem Slave-Terminal zurückgeführt wird, das Verfahren ferner umfasst:
Bestimmen, ob eine voreingestellte Anzahl von Rahmenintervallen empfangen wird.

7. Verzögerungsmessverfahren, das auf ein Slave-Terminal angewendet wird, umfassend:als Reaktion auf das Empfangen, an dem Slave-Terminal,

eines ersten voreingestellten Overhead-Bytes, das einen ersten Informationsrahmen trägt, wobei der erste Informationsrahmen einen ersten Zeitstempelwert trägt und das erste voreingestellte Overhead-Byte ein Overhead-Byte in einem synchronen digitalen Hierarchie-, SDH-, Protokoll ist, Erhalten (S210) eines aktuellen Zeitstempelwerts einer lokalen Uhr und Nehmen des aktuellen Zeitstempelwerts als zweiten Zeitstempelwert;
Bestimmen, an dem Slave-Terminal (S220), eines zweiten Informationsrahmens gemäß dem zweiten Zeitstempelwert, einem vorab erhaltenen dritten Zeitstempelwert und dem in dem ersten Informationsrahmen getragenen ersten Zeitstempelwert,
wobei der dritte Zeitstempelwert der Zeitpunkt ist, zu dem eine Präambel in dem zweiten Informationsrahmen in ein zweites voreingestelltes Overhead-Byte in dem SDH-Protokoll interpoliert wird; und
Zurückführen, durch das Slave-Terminal (S230), des zweiten voreingestellten Overhead-Bytes, das den zweiten Informationsrahmen trägt, zu einem Master-Terminal, wobei der zweite Informationsrahmen dazu verwendet wird, dem Master-Terminal die Bestimmung einer Datenübertragungsverzögerung zu ermöglichen; wobei der zweite Informationsrahmen den ersten Zeitstempelwert, den zweiten Zeitstempelwert und den dritten Zeitstempelwert trägt und das Master-Terminal dazu konfiguriert ist, die Datenübertragungsverzögerung gemäß dem ersten Zeitstempelwert, dem zweiten Zeitstempelwert, dem dritten Zeitstempelwert und dem vierten Zeitstempelwert zu bestimmen; und der erste Zeitstempelwert und der vierte Zeitstempelwert an dem Master-Terminal bestimmt werden durch:Erhalten, an dem Master-Terminal, eines aktuelles Zeitstempelwerts einer lokalen Uhr des Master-Terminals und Nehmen des aktuellen Zeitstempelwerts als ersten Zeitstempelwert, der dem ersten Informationsrahmen entspricht, als Reaktion auf das Empfangen einer Master-Modus-Startanweisung und Überwachen des Eintreffens des ersten voreingestellten Overhead-Bytes in einem Datenstrom; und
Erhalten, an dem Master-Terminal, eines aktuellen Zeitstempelwerts einer anderen lokalen Uhr des Master-Terminals und Nehmen des aktuellen Zeitstempelwerts als vierten Zeitstempelwert als Reaktion auf das Empfangen der Präambel in dem zweiten Informationsrahmen.

8. Verfahren nach Anspruch 7, wobei vor dem Empfangen, an dem Slave-Terminal, des ersten voreingestellten Overhead-Bytes, das den ersten Informationsrahmen trägt, das Verfahren ferner umfasst:
Empfangen einer Slave-Modus-Startanweisung.

9. Verfahren nach Anspruch 7, wobei das Bestimmen, an dem Slave-Terminal, des zweiten Informationsrahmens gemäß dem zweiten Zeitstempelwert, dem vorab erhaltenen dritten Zeitstempelwert und dem ersten Zeitstempelwert in dem ersten Informationsrahmen umfasst:

Bestimmen eines zweiten Bit Interleaved Parity-, BIP-, Paritätsbits gemäß dem zweiten Zeitstempelwert, dem ersten Zeitstempelwert in dem ersten Informationsrahmen und dem vorab erhaltenen dritten Zeitstempelwert; und
Bestimmen des zweiten Informationsrahmens gemäß dem zweiten Zeitstempelwert, dem ersten Zeitstempelwert in dem ersten Informationsrahmen, dem vorab erhaltenen dritten Zeitstempelwert, dem zweiten BIP-Paritätsbit und der vorkonfigurierten Präambel.

10. Verfahren nach Anspruch 7, wobei als Reaktion darauf, dass eine Rahmenlänge des zweiten Informationsrahmens eine Länge des zweiten voreingestellten Overhead-Bytes überschreitet, das Zurückführen des zweiten voreingestellten Overhead-Bytes, das den zweiten Informationsrahmen trägt, an das Master-Terminal umfasst:

Zerlegen des zweiten Informationsrahmens in eine Vielzahl von voreingestellten Bits; und
sequenzielles Zurückführen eines ersten Zeitstempelwerts, eines zweiten Zeitstempelwerts, eines dritten Zeitstempelwerts und eines zweiten BIP-Paritätsbits in dem zweiten Informationsrahmen entsprechend der Vielzahl von voreingestellten Bits.

11. Verfahren nach Anspruch 7, wobei vor dem Empfangen, an dem Slave-Terminal, des ersten voreingestellten Overhead-Bytes, das den ersten Informationsrahmen trägt, das Verfahren ferner umfasst:
Bestimmen, ob eine voreingestellte Anzahl von Rahmenintervallen empfangen wird.

**12.** Verzögerungsmesssystem, umfassend: ein Master-Terminal (10) und ein Slave-Terminal (20), wobei das Master-Terminal (10) und das Slave-Terminal (20) ein identisches Verzögerungsmessmodul (310) enthalten; und das Verzögerungsmessmodul (310) einen Zeitstempelzähler, ein Overhead-Interpolations- und -Informationsübertragungsmodul (3102), ein Overhead-Extraktions- und -Informationsempfangsmodul (3103) und ein Verzögerungsberechnungsmodul (3104) umfasst;

der Zeitstempelzähler (3101) jeweils mit dem Overhead-Interpolations- und -Informationsübertragungsmodul (3102), dem Overhead-Extraktions- und -Informationsempfangsmodul (3103) und dem Verzögerungsberechnungsmodul (3104) verbunden ist; das Overhead-Interpolations- und -Informationsübertragungsmodul (3102) mit dem Overhead-Extraktions- und -Informationsempfangsmodul (3103) verbunden ist; und das Overhead-Extraktions- und -Informationsempfangsmodul (3103) mit dem Verzögerungsberechnungsmodul (3104) verbunden ist;

der Zeitstempelzähler (3101) dazu konfiguriert ist, dem Overhead-Interpolations- und -Informationsübertragungsmodul (3102), dem Overhead-Extraktions- und -Informationsempfangsmodul (3103) und dem Verzögerungsberechnungsmodul (3104) eine Zeitstempelwertsammlung in Echtzeit bereitzustellen und die Zeitstempelwertsammlung mindestens einen vom Folgendem umfasst: einen ersten Zeitstempelwert, einen zweiten Zeitstempelwert, einen dritten Zeitstempelwert und einen vierten Zeitstempelwert;

das Overhead-Interpolations- und -Informationsübertragungsmodul (3102) konfiguriert ist zum Erzeugen eines ersten Informationsrahmens und eines zweiten Informationsrahmens, Interpolieren des ersten Informationsrahmens in ein erstes voreingestelltes Overhead-Byte und Interpolieren des zweiten Informationsrahmens in ein zweites voreingestelltes Overhead-Byte und das erste voreingestellte Overhead-Byte und das zweite voreingestellte Overhead-Byte beide ein Overhead-Byte in einem synchronen digitalen Hierarchie-, SDH-, Protokoll sind;

das Overhead-Extraktions- und -Informationsempfangsmodul (3103) konfiguriert ist zum Überwachen und Empfangen des ersten voreingestellten Overhead-Bytes und des zweiten voreingestellten Overhead-Bytes und als Reaktion darauf, dass das erste voreingestellte Overhead-Byte oder das zweite voreingestellte Overhead-Byte den ersten Informationsrahmen oder den zweiten Informationsrahmen enthält, Identifizieren und Extrahieren des ersten Informationsrahmens oder des zweiten Informationsrahmens aus dem ersten voreingestellten Overhead-Byte oder dem zweiten voreingestellten Overhead-Byte; und

das Verzögerungsberechnungsmodul (3104) konfiguriert ist zum Erhalten einer Datenübertragungsverzögerung gemäß dem ersten Zeitstempelwert, dem zweiten Zeitstempelwert und dem dritten Zeitstempelwert in dem zweiten Informationsrahmen und dem vorab erhaltenen vierten Zeitstempelwert;

wobei der erste Zeitstempelwert, der zweite Zeitstempelwert, der dritte Zeitstempelwert und der vierte Zeitstempelwert bestimmt werden durch:

Erhalten, an dem Master-Terminal, eines aktuellen Zeitstempelwerts einer lokalen Uhr des Master-Terminals und Nehmen des aktuellen Zeitstempelwerts als ersten Zeitstempelwert, der dem ersten Informationsrahmen entspricht, als Reaktion auf das Empfangen einer Master-Modus-Startanweisung und Überwachen des Eintreffens des ersten voreingestellten Overhead-Bytes in einem Datenstrom;

als Reaktion auf das Empfangen, an dem Slave-Terminal, des ersten voreingestellten Overhead-Bytes, das den ersten Informationsrahmen trägt, Erhalten (S210) eines aktuellen Zeitstempelwerts einer lokalen Uhr des Slave-Terminals und Nehmen des aktuellen Zeitstempelwerts als zweiten Zeitstempelwert;

Bestimmen, an dem Slave-Terminal, des dritten Zeitstempelwerts als den Zeitpunkt, zu dem eine Präambel in dem zweiten Informationsrahmen von dem Slave-Terminal in das zweite voreingestellte Overhead-Byte interpoliert wird; und

Erhalten, an dem Master-Terminal, eines aktuellen Zeitstempelwerts einer anderen lokalen Uhr des Master-Terminals und Nehmen des aktuellen Zeitstempelwerts als vierten Zeitstempelwert als Reaktion auf das Empfangen der Präambel in dem zweiten Informationsrahmen,

wobei das System dazu konfiguriert ist, das Verzögerungsmessverfahren nach einem der Ansprüche 1 bis 11 durchzuführen.

**13.** Speichermedium, auf dem ein Computerprogramm gespeichert ist, das beim Ausführen durch einen Prozessor den Prozessor dazu veranlasst, das Verzögerungsmessverfahren nach einem der Ansprüche 1 bis 11 durchzuführen.

## Revendications

1. Procédé de mesure de retard, appliqué à un terminal maître, comprenant : la détermination au niveau du terminal maître (S110) d'une première trame d'informations selon une première valeur d'estampille temporelle obtenue à l'avance ;

la transmission par le terminal maître (S120) d'un premier octet de surdébit prédéfini transportant la première trame d'informations à un terminal esclave, ladite première trame d'informations transportant la première valeur d'estampille temporelle, et ledit premier octet de surdébit prédéfini étant un octet de surdébit dans un protocole de hiérarchie numérique synchrone, SDH ;
la réception au niveau du terminal maître (S130) d'un second octet de surdébit prédéfini transportant une seconde trame d'informations renvoyée par le terminal esclave, ledit second octet de surdébit prédéfini étant un octet de surdébit dans le protocole SDH ; et
la détermination au niveau du terminal maître (S140) d'un retard de transmission de données selon la première valeur d'estampille temporelle, une deuxième valeur d'estampille temporelle et une troisième valeur d'estampille temporelle transportées dans la seconde trame d'informations et une quatrième valeur d'estampille temporelle obtenue à l'avance ;
ladite première valeur d'estampille temporelle, ladite deuxième valeur d'estampille temporelle, ladite troisième valeur d'estampille temporelle et ladite quatrième valeur d'estampille temporelle étant déterminées par :

l'obtention au niveau du terminal maître d'une valeur d'estampille temporelle actuelle d'une horloge locale du terminal maître, et la prise de la valeur d'estampille temporelle actuelle comme première valeur d'estampille temporelle correspondant à la première trame d'informations, en réponse à la réception d'une instruction de démarrage de mode maître et à la surveillance de l'arrivée du premier octet de surdébit prédéfini dans un flux de données ;
en réponse à la réception au niveau du terminal esclave du premier octet de surdébit prédéfini transportant la première trame d'informations, l'obtention (S210) au niveau du terminal esclave d'une valeur d'estampille temporelle actuelle d'une horloge locale du terminal esclave, et la prise de la valeur d'estampille temporelle actuelle comme deuxième valeur d'estampille temporelle ;
la détermination au niveau du terminal esclave de la troisième valeur d'estampille temporelle comme le moment où un préambule dans la seconde trame d'informations est interpolé dans le second octet de surdébit prédéfini par le terminal esclave ; et
l'obtention au niveau du terminal maître d'une valeur d'estampille temporelle actuelle d'une autre horloge locale du terminal maître, et la prise de la valeur d'estampille temporelle actuelle comme quatrième valeur d'estampille temporelle, en réponse à la réception du préambule dans la seconde trame d'informations.

2. Procédé de la revendication 1, ladite détermination au niveau du terminal maître (S110) de la première trame d'informations selon la première valeur d'estampille temporelle obtenue à l'avance comprenant :

l'obtention au niveau du terminal maître d'une valeur d'estampille temporelle actuelle d'une horloge locale, et la prise de la valeur d'estampille temporelle actuelle comme première valeur d'estampille temporelle correspondant à la première trame d'informations, en réponse à la réception d'une instruction de démarrage de mode maître et à la surveillance de l'arrivée du premier octet de surdébit prédéfini dans un flux de données ;
la détermination d'un premier bit de parité à parité par entrelacement de bits, BIP, selon la première valeur d'estampille temporelle et une deuxième valeur d'estampille temporelle préconfigurée et une troisième valeur d'estampille temporelle préconfigurée, ladite deuxième valeur d'estampille temporelle préconfigurée et ladite troisième valeur d'estampille temporelle préconfigurée étant toutes deux une première valeur prédéfinie ; et
la détermination de la première trame d'informations selon la première valeur d'estampille temporelle correspondant à la première trame d'informations, la deuxième valeur d'estampille temporelle préconfigurée, la troisième valeur d'estampille temporelle préconfigurée, le premier bit de parité BIP et d'un préambule préconfiguré.

3. Procédé de la revendication 1, ladite détermination au niveau du terminal maître du retard de transmission de données selon une première valeur d'estampille temporelle, une deuxième valeur d'estampille temporelle et une troisième valeur d'estampille temporelle dans la seconde trame d'informations et une quatrième valeur d'estampille temporelle obtenues à l'avance comprenant :

l'obtention au niveau du terminal maître de la valeur d'estampille temporelle actuelle de l'autre horloge locale, et la prise de la valeur d'estampille temporelle actuelle comme quatrième valeur d'estampille temporelle, en réponse à la réception du préambule dans la seconde trame d'informations ;

l'identification et l'extraction de la première valeur d'estampille temporelle, de la deuxième valeur d'estampille temporelle et de la troisième valeur d'estampille temporelle dans la seconde trame d'informations ; et

le calcul de la quatrième valeur d'estampille temporelle, et de la première valeur d'estampille temporelle, de la deuxième valeur d'estampille temporelle et de la troisième valeur d'estampille temporelle dans la seconde trame d'informations sur la base d'une règle prédéfinie pour obtenir le retard de transmission de données.

4. Procédé de la revendication 3, ledit calcul de la quatrième valeur d'estampille temporelle, et de la première valeur d'estampille temporelle, de la deuxième valeur d'estampille temporelle et de la troisième valeur d'estampille temporelle dans la seconde trame d'informations sur la base d'une règle prédéfinie pour obtenir le retard de transmission de données comprenant :

la détermination d'un premier retard unidirectionnel selon la première valeur d'estampille temporelle et la seconde valeur d'estampille temporelle dans la seconde trame d'informations et d'une première valeur d'écart prédéfinie préconfigurée ;

la détermination d'un second retard unidirectionnel selon la quatrième valeur d'estampille temporelle, la troisième valeur d'estampille temporelle dans la seconde trame d'informations et une seconde valeur d'écart prédéfinie préconfigurée ; et

la détermination du retard de transmission de données selon le premier retard unidirectionnel et le second retard unidirectionnel.

5. Procédé de la revendication 1, en réponse à une longueur de trame de la première trame d'informations dépassant une longueur du premier octet de surdébit prédéfini, la transmission du premier octet de surdébit prédéfini transportant la première trame d'informations au terminal esclave comprenant :

la décomposition de la première trame d'informations en une pluralité de bits prédéfinis ; et

la transmission séquentielle de la première valeur d'estampille temporelle, de la deuxième valeur d'estampille temporelle, de la troisième valeur d'estampille temporelle et d'un premier bit de parité BIP dans la première trame d'informations au terminal esclave selon les bits prédéfinis.

6. Procédé de la revendication 1, après avoir transmis le premier octet de surdébit prédéfini transportant la première trame d'informations au terminal esclave, et avant de recevoir le second octet de surdébit prédéfini transportant la seconde trame d'informations renvoyée par le terminal esclave, ledit procédé comprenant en outre :
la détermination pour savoir si un nombre prédéfini d'intervalles de trame est reçu.

7. Procédé de mesure de retard, appliqué à un terminal esclave, comprenant : en réponse à une réception au niveau du terminal esclave

d'un premier octet de surdébit prédéfini transportant une première trame d'informations, ladite première trame d'informations transportant une première valeur d'estampille temporelle, et ledit premier octet de surdébit prédéfini étant un octet de surdébit dans un protocole de hiérarchie numérique synchrone, SDH, l'obtention (S210) d'une valeur d'estampille temporelle actuelle d'une horloge locale, et la prise de la valeur d'estampille temporelle actuelle comme deuxième valeur d'estampille temporelle ;

la détermination au niveau du terminal esclave (S220) d'une seconde trame d'informations selon la deuxième valeur d'estampille temporelle, une troisième valeur d'estampille temporelle obtenue à l'avance et la première valeur d'estampille temporelle transportée dans la première trame d'informations,

ladite troisième valeur d'estampille temporelle étant le moment où un préambule dans la seconde trame d'informations est interpolé dans un second octet de surcharge prédéfini dans le protocole SDH ; et

le renvoi par le terminal esclave (S230) du second octet de surdébit prédéfini transportant la seconde trame d'informations à un terminal maître, ladite seconde trame d'informations étant utilisée pour permettre au terminal maître de déterminer un retard de transmission de données ;

ladite seconde trame d'informations transportant la première valeur d'estampille temporelle, la deuxième valeur d'estampille temporelle et la troisième valeur d'estampille temporelle, et ledit terminal maître étant configuré pour déterminer le retard de transmission de données selon la première valeur d'estampille temporelle, la deuxième valeur d'estampille temporelle, la troisième valeur d'estampille temporelle et la quatrième valeur d'estampille temporelle ; et

ladite première valeur d'estampille temporelle et ladite quatrième valeur d'estampille temporelle étant déterminées au niveau du terminal maître en obtenant au niveau du terminal maître une valeur d'estampille temporelle actuelle d'une horloge locale du terminal maître, et en prenant la valeur d'estampille temporelle actuelle comme première valeur d'estampille temporelle correspondant à la première trame d'informations, en réponse à la réception d'une instruction de démarrage de mode maître et à la surveillance de l'arrivée du premier octet de surcharge prédéfini dans un flux de données ; et l'obtention au niveau du terminal maître d'une valeur d'estampille temporelle actuelle d'une autre horloge locale du terminal maître, et la prise de la valeur d'estampille temporelle actuelle comme quatrième valeur d'estampille temporelle, en réponse à la réception du préambule dans la seconde trame d'informations.

8. Procédé de la revendication 7, avant de recevoir au niveau du terminal esclave le premier octet de surdébit prédéfini transportant la première trame d'informations, ledit procédé comprenant en outre : la réception d'une instruction de démarrage de mode esclave.

9. Procédé de la revendication 7, ladite détermination au niveau du terminal esclave de la seconde trame d'informations selon la deuxième valeur d'estampille temporelle, la troisième valeur d'estampille temporelle obtenue à l'avance et la première valeur d'estampille temporelle dans la première trame d'informations comprenant :

la détermination d'un second bit de parité à parité par entrelacement de bits, BIP, selon la deuxième valeur d'estampille temporelle, la première valeur d'estampille temporelle dans la première trame d'informations et la troisième valeur d'estampille temporelle obtenue à l'avance ; et la détermination de la seconde trame d'informations selon la deuxième valeur d'estampille temporelle, la première valeur d'estampille temporelle dans la première trame d'informations, la troisième valeur d'estampille temporelle obtenue à l'avance, le second bit de parité BIP et le préambule préconfiguré.

10. Procédé de la revendication 7, en réponse à une longueur de trame de la seconde trame d'informations dépassant une longueur du second octet de surdébit prédéfini, ledit renvoi du second octet de surdébit prédéfini transportant la seconde trame d'informations au terminal maître comprenant :

la décomposition de la seconde trame d'informations en une pluralité de bits prédéfinis ; et

le renvoi séquentiel d'une première valeur d'estampille temporelle, d'une deuxième valeur d'estampille temporelle, d'une troisième valeur d'estampille temporelle et d'un second bit de parité BIP dans la seconde trame d'informations selon la pluralité de bits prédéfinis.

11. Procédé de la revendication 7, avant de recevoir au niveau du terminal esclave le premier octet de surdébit prédéfini transportant la première trame d'informations, ledit procédé comprenant en outre : la détermination pour savoir si un nombre prédéfini d'intervalles de trame est reçu.

12. Système de mesure de retard, comprenant : un terminal maître (10) et un terminal esclave (20), ledit terminal maître (10) et ledit terminal esclave (20) contenant un même module de mesure de retard (310) ; et ledit module de mesure de retard (310) comprenant un compteur d'estampille temporelle, un module d'interpolation de surdébit et de transmission d'informations (3102), un module d'extraction de surdébit et de réception d'informations (3103) et un module de calcul de retard (3104) ;

ledit compteur d'estampille temporelle (3101) étant respectivement connecté au module d'interpolation de surdébit et de transmission d'informations (3102), au module d'extraction de surdébit et de réception (3103) et au module de calcul de retard (3104); ledit module d'interpolation de surdébit et de transmission d'informations (3102) étant connecté au module d'extraction de surdébit et de réception d'informations (3103) ; et ledit module d'extraction de surdébit et de réception d'informations (3103) étant connecté au module de calcul de retard (3104) ; ledit compteur d'estampille temporelle (3101) étant configuré pour fournir une collection de valeurs d'estampille temporelle au module d'interpolation de surdébit et de transmission d'informations (3102), au module d'extraction de surdébit et de réception d'informations (3103) et au module de calcul de retard (3104) en temps réel, et ladite collection de valeurs d'estampille temporelle comprenant au moins l'un des suivants : une première valeur d'estampille temporelle, une deuxième valeur d'estampille temporelle, une troisième valeur d'estampille temporelle et une quatrième valeur d'estampille temporelle ; ledit module d'interpolation de surdébit et de transmission d'informations (3102) étant configuré pour générer une première trame d'informations et une seconde trame d'informations, interpoler la première trame d'informations en un premier octet de surdébit prédéfini, et interpoler la seconde trame d'informations en un second octet de surdébit prédéfini, et ledit premier octet de surdébit prédéfini et ledit second octet de surdébit prédéfini étant tous deux un octet de surdébit dans un protocole de hiérarchie numérique synchrone, SDH ;

ledit module d'extraction de surdébit et de réception d'informations (3103) étant configuré pour surveiller et recevoir le premier octet de surdébit prédéfini et le second octet de surdébit prédéfini, et en réponse au premier octet de surdébit prédéfini ou au second octet de surdébit prédéfini contenant la première trame d'informations ou la seconde trame d'informations, identifier et extraire la première trame d'informations ou la seconde trame d'informations du premier octet de surdébit prédéfini ou du second octet de surdébit prédéfini ; et

ledit module de calcul de retard (3104) étant configuré pour obtenir un retard de transmission de données selon la première valeur d'estampille temporelle, la deuxième valeur d'estampille temporelle et la troisième valeur d'estampille temporelle dans la seconde trame d'informations et la quatrième valeur d'estampille temporelle obtenues à l'avance ;

ladite première valeur d'estampille temporelle, ladite deuxième valeur d'estampille temporelle, ladite troisième valeur d'estampille temporelle et ladite quatrième valeur d'estampille temporelle étant déterminées par :

l'obtention au niveau du terminal maître d'une valeur d'estampille temporelle actuelle d'une horloge locale du terminal maître, et la prise de la valeur d'estampille temporelle actuelle comme première valeur d'estampille temporelle correspondant à la première trame d'informations, en réponse à la réception d'une instruction de démarrage de mode maître et à la surveillance de l'arrivée du premier octet de surdébit prédéfini dans un flux de données ;

en réponse à la réception au niveau du terminal esclave du premier octet de surdébit prédéfini transportant la première trame d'informations, l'obtention (S210) d'une valeur d'estampille temporelle actuelle d'une horloge locale du terminal esclave, et la prise de la valeur d'estampille temporelle actuelle comme deuxième valeur d'estampille temporelle ;

la détermination au niveau du terminal esclave de la troisième valeur d'estampille temporelle comme moment où un préambule dans la seconde trame d'informations est interpolé dans le second octet de surdébit prédéfini par le terminal esclave ; et

l'obtention au niveau du terminal maître d'une valeur d'estampille temporelle actuelle d'une autre horloge locale du terminal maître, et la prise de la valeur d'estampille temporelle actuelle comme quatrième valeur d'estampille temporelle, en réponse à la réception du préambule dans la seconde trame d'informations,

ledit système étant configuré pour effectuer le procédé de mesure de retard selon l'une quelconque des revendications 1 à 11.

13. Support de stockage stockant un programme informatique qui, lorsqu'il est exécuté par un processeur, amène le processeur à effectuer le procédé de mesure de retard selon l'une quelconque des revendications 1 à 11.

| Determine a first information frame according to a first timestamp value obtained in advance | S110 |
| Transmit a first preset overhead byte carrying the first information frame to a slave terminal | S120 |
| Receive a second preset overhead byte carrying a second information frame fed back from the slave terminal | S130 |
| Determine a data transmission delay according to a first timestamp value, a second timestamp value and a third timestamp valuein the second information frame and a fourth timestamp value obtained in advance | S140 |

Fig. 1

| Field | Preamble | T1 timestamp value | T2 timestamp value | T3 timestamp value | BIP-N parity bit |
|-------|----------|--------------------|--------------------|--------------------|------------------|
| Length (bit) | m | n | n | n | N |

Fig. 2

In response to receiving a first preset overhead byte
carrying a first information frame,
obtain a current timestamp value of a local clock,
and take the current timestamp value as a second timestamp value

S210

Determine a second information frame according to
the second timestamp value, a third timestamp value
obtained in advance and the first timestamp value in
the first information frame

S220

Feed back the second preset overhead byte carrying
the second information frame to a master terminal

S230

Fig. 3

Master terminal                    Slave terminal

Start delay
measurement ⟶  T1

| 11 | T1 | 0 | 0 | BIP4 |

T2

T3

Calculate delay

| T1 | T2 | T3 | T4 |  ⟵  T4

| 11 | T1 | T2 | T3 | BIP4 |

T1'

| 11 | T1' | 0 | 0 | BIP4 |

T2'

T3'

Calculate delay

| T1' | T2' | T3' | T4' |  ⟵  T4'

| 11 | T1' | T2' | T3' | BIP4 |

Fig. 4

23

10

Master terminal

310

Delay
measurement
module

Tx    Rx

Rx    Tx

20

Slave terminal

310

Delay
measurement
module

Fig. 5

310

Delay measurement module 3101

3102

Timestamp counter

Overhead interpolating
and information
transmitting module

3104

3103

Delay calculating
module

Overhead extracting
and information
receiving module

Fig. 6

Fig. 7

**EP 3 955 528 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2472754 A1